# EUROPEAN PATENT SPECIFICATION

(11) **EP 0 919 455 B1**
(45) Date of publication and mention of the grant of the patent: **07.03.2007**
(21) Application number: 97935842.1
(22) Date of filing: 20.08.1997
(51) Int. Cl.: B62D 55/253

(54) **SWIVEL WORKING VEHICLE**
SCHWENKBARE ERDBAUMSCHINE
ENGIN DE TERRASSEMENT PIVOTANT

(30) Priority: 20.08.1996 JP 21865796; 01.07.1997 JP 17603797; 01.07.1997 JP 17603897
(43) Date of publication of application: 02.06.1999
(73) Proprietor: Yanmar Co., Ltd., Osaka-shi, Osaka 530-0013 (JP)
(72) Inventor: KONDO, Masami, Yanmar Diesel Engine Co., Ltd, Osaka-shi, Osaka 530 (JP); KAWAMURA, Takuzo, Yanmar Diesel Engine Co., Ltd, Osaka-shi, Osaka 530 (JP); SETOGUCHI, Hajime, Yanmar Diesel Engine Co., Ltd, Osaka-shi, Osaka 530 (JP); TANAKA, Katashi, Yanmar Diesel Engine Co., Ltd, Osaka-shi, Osaka 530 (JP)
(74) Representative: Henkel, Feiler & Hänzel
(86) International application number: PCT/JP1997/002899
(87) International publication number: WO 1998/007613

(56) References cited:
- JP-A- 6 234 376
- JP-A- 6 286 674
- JP-A- 8 026 154
- JP-A- 8 164 881
- JP-A- 8 188 184
- JP-A- 8 301 154
- JP-U- 56 129 378
- JP-U- 58 036 973
- JP-U- 61 147 679
- PATENT ABSTRACTS OF JAPAN vol. 1996, no. 07, 31 July 1996 (1996-07-31) -& JP 08 072759 A (SHIN CATERPILLAR MITSUBISHI LTD), 19 March 1996 (1996-03-19)

## Description

### Field of the Art

The present invention relates to a swivel working vehicle with travelling devices like a crawler hydraulic shovel.

### Background Art

Conventional arts about a form of a crawler for a crawler travelling device have been shown in Japanese Laid Open Gazettes Nos. Hei 8-53079, Hei 8-58647, 72759, Hei 8-85480, Hei 8-85482, Hei 8-91256, Hei 8-99656 and Hei 8-104262, for example.

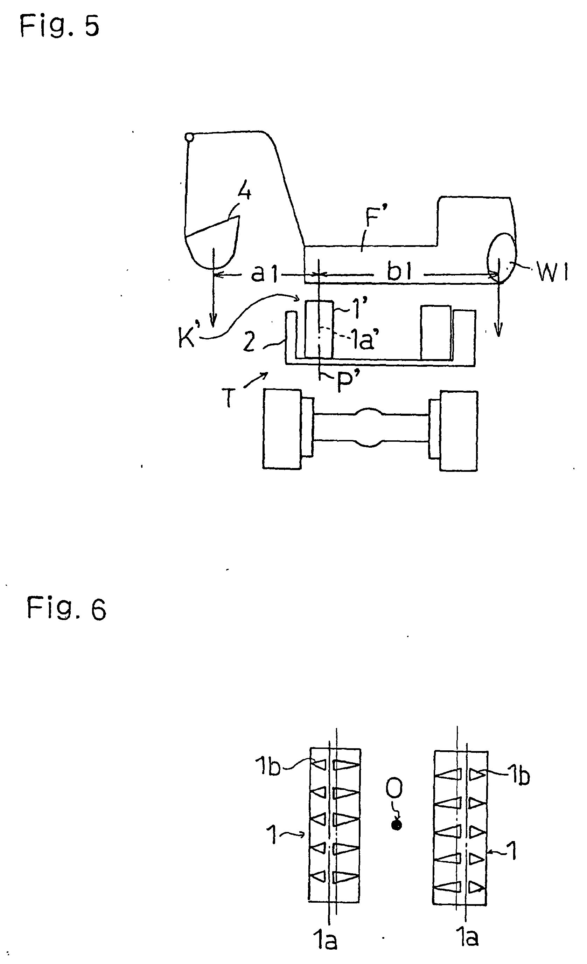

Referring to a conventional crawler hydraulic shovel serving as a swivel working vehicle as shown in Fig. 5, a swivel body F' thereof provided with a back-hoe including a bucket 4 serving as a working mechanism is mounted above left and right travelling devices K' thereof so that a rear end of swivel body F', when swivelled so as to be directed in substantially perpendicular to the travelling direction of the travelling devices K', projects outwardly beyond the lateral width between the outsides of the travelling devices K'.

In this regard, when the conventional swivel vehicle is carried by a small dump truck T like one of 2 or 4 capacity tonnage, which can be driven by a common licensed driver, to an excavating site, it is placed on a bed 2 of the dump truck T, as shown in Fig 5, so that the swivel body F' is swivelled so as to direct the bucket 4 substantially perpendicularly to the travelling direction of the machine body. In this condition, a balance weight W1 on the rear end of the swivel body F' projects outwardly from one of the travelling devices K'.

As shown in Fig. 5, the swivel body F' is loaded with the balance weight W1, so that, with respect to core metal projections 1a of one of crawlers 1' defined as a balanced point P, a part of the swivel body F' toward the balance weight W1 is balanced against the other part thereof toward the bucket 4.

In this construction, a distance b1 between the balanced point P and the center of gravity of the balance weight W1 is set longer than a distance a1 between the balanced point P and the center of gravity of the bucket 4, so that the weight balance between the part toward the bucket 4 and the part toward the balance weight W1 is held while the balance weight W1 is light.

This setting stabilizes the vehicle operating in the condition that the swivel body F' is swivelled so as to direct the back-hoe including the bucket 4 in substantially perpendicular to the travelling direction of the travelling devices K', while the width between the travelling devices K' is so small as to be located on the bed 2 of the dump truck T.

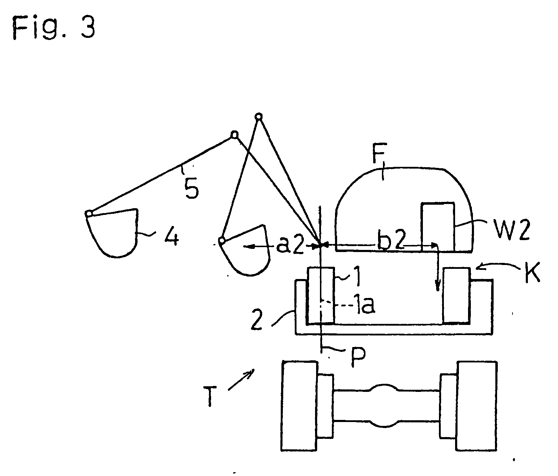

On the other hand, a swivel working vehicle shown in Fig. 3 is of a type with a small swivelling capacity, which is so constructed that a rear portion of a swivel body F is formed into a circular shape and is disposed within a lateral width between the outsides of the travelling devices K' for preventing the rear portion of the swivel body F from projecting beyond the travelling device K. However, when the swivel body F' is swivelled so as to direct the back-hoe thereon including a bucket 4 in substantially perpendicular to the travelling direction of the travelling devices K, it gets out of balance due to the heavy weight of the bucket 4 and a bucket arm 5 against the balance weight W2, so that the machine body is apt to tilt toward the bucket 4, thereby causing the vehicle in operation to tumble or the vehicle placed on the bed 2 of the dump truck T to fall.

Thus, the swivel working vehicle shown in Fig. 3 requires the balance weight W2 thereof to be considerably heavy for preventing itself from tumbling toward the bucket 4.

The swivel working vehicle shown in Fig. 3 provided with the balance weight W2, which is heavier than the balance weight W1, is advantageous in capacities of swivelling and operating in comparison with that shown in Fig. 5, however, it is lacking in capacity of excavation and expensive because of the weight of its balance weight W2 as such.

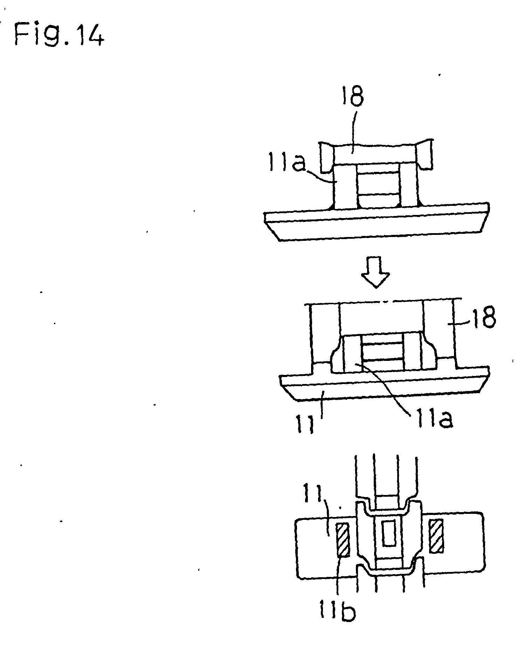

JP 08 072759A discloses a swivel working vehicle on which the preamble portion of claim 1 is based. This working vehicle has a pair of travelling devices including crawlers and an arrangement and a support structure of the core metal projecting portions and rollers as depicted in the top showing of Fig. 14.

### Disclosure of the Invention

According to the invention there is provided a swivel working vehicle as defined in claim 1. Preferred embodiments are defined in the dependent claims.

According to the present invention, for preventing the swivel working vehicle with a small circular swivelling capacity as shown in Fig. 3 from tumbling toward the bucket 4 in case that the back-hoe including the bucket 4 serving as a working mechanism is swivelled so as to direct in substantially perpendicular to the travelling direction of the travelling devices K' while the balance weight W2 is reduced as much as possible, the core metal projections 1a of the crawler 1 defined as the point P balanced between the side toward the bucket 4 of the working mechanism and the side toward the balance weight W2 are offset toward a lateral outside thereof as much as possible, thereby reducing a distance a2 between the core metal projections 1a and the center of gravity of the bucket 4 and increasing a distance b2 between the core metal projections 1a and the center of gravity of the balance weight W2.

Also, for this construction, the lugs are formed on the outer peripheral surface of the crawler 1 into such shapes as to prevent eccentric abrasion of the lugs, to make the left and right crawlers replaceable with each other and to ease sweeping of soils contaminated between the lugs while the core metal projections 1a are formed outwardly eccentrically on the crawler 1.

### Brief Description of Drawings

Fig. 1 is a side view of the whole of a swivel working vehicle according to the present invention;
Fig. 2 is a plan view of the same;
Fig. 3 is a rear view of the swivel working vehicle according to the present invention which is placed on a bed of a dump truck;
Fig. 4 is a view showing variation of a balanced point P as core metal projections 1a of crawlers 1 are changed;
Fig. 5 is a rear view of a hydraulic back-hoe shovel of a conventional swivel working vehicle provided with a swivel body, whose rear portion projects outwardly beyond a lateral width of the travelling devices, placed on the bed of the dump truck;
Fig. 6 is a schematic plan view of left and right crawlers 1 whose lugs are formed so as to assume point symmetrical shapes about a swivelling center;
Fig. 7 is a schematic plan view of similar left and right crawlers 1 according to another embodiment;
Fig. 8 is a fragmentary front view of a crawler 1 provided with lugs 1b occupying the same area on the left and right of the core metal projections 1a;
Fig. 9 includes fragmentary sectional front views showing various portions of the crawler 1 provided with the offset core metal projections 1a;
Fig. 10 is a sectional front view of the crawler 1 provided therein with steel cords 17 disposed left and right about the core metal projections 1a for reinforcement so that the left ones are as many as the right ones;
Fig. 11 includes a fragmentary front view and a fragmentary plan view of the crawler 1 comprising crawler pieces integrally connected with one another through engaging of convexes 12 and concaves 13 in front and rear of the core metals;
Fig. 12 is a sectional front view of the crawler 1 showing the effect of such a construction as shown in Fig. 11, wherein the crawler pieces 1 are connected front and behind through engaging of convexes 12 and concaves 13;
Fig. 13 includes fragmentary sectional front views showing various portions of an iron crawler 11 provided with offset engaging projections 11a;
Fig. 14 includes a fragmentary front view and a fragmentary plan view of the iron crawler 11 showing constructions of the engaging projections 11a and the roller 18;

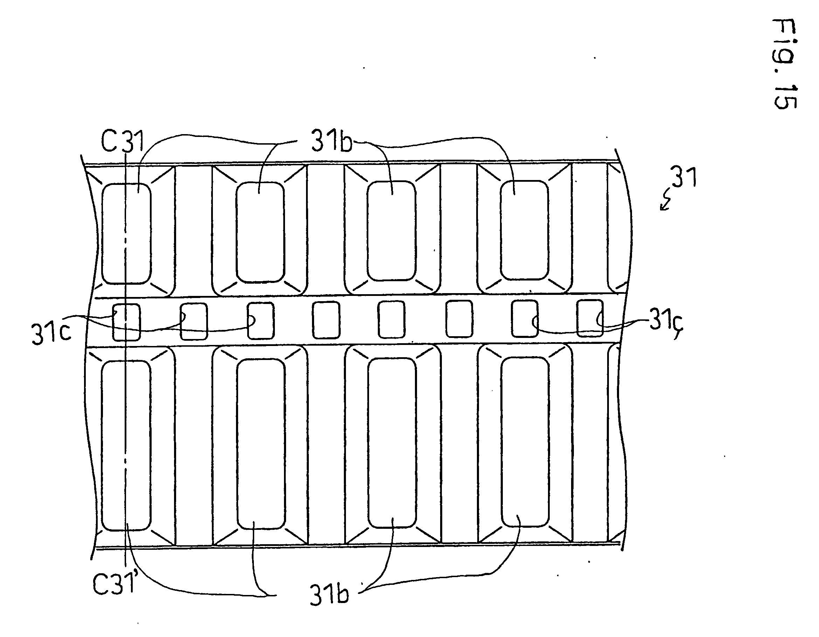

Fig. 15 is a front view of a crawler 31 showing an embodiment about shapes of lugs;
Fig. 16 is a front view of a crawler 32 showing another embodiment about the same;

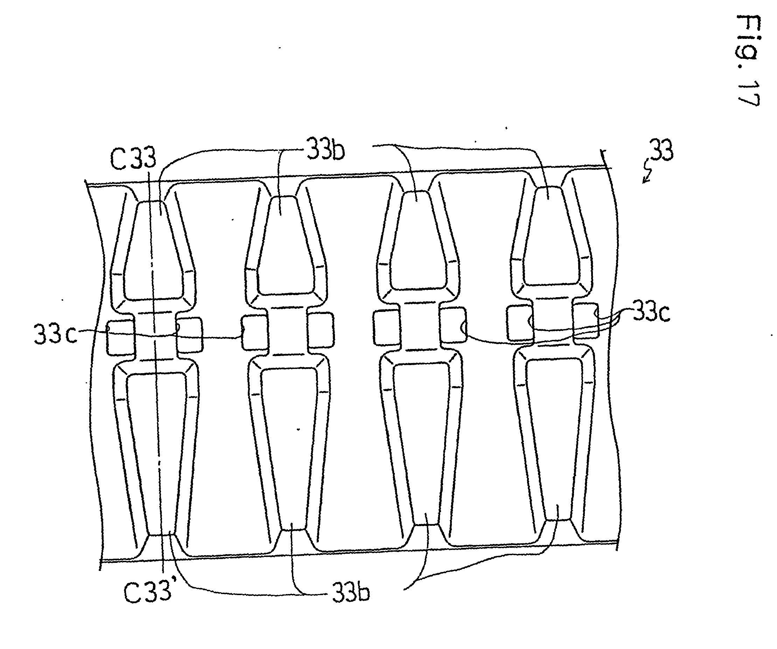

Fig. 17 is a front view of a crawler 33 showing still another embodiment about the same;

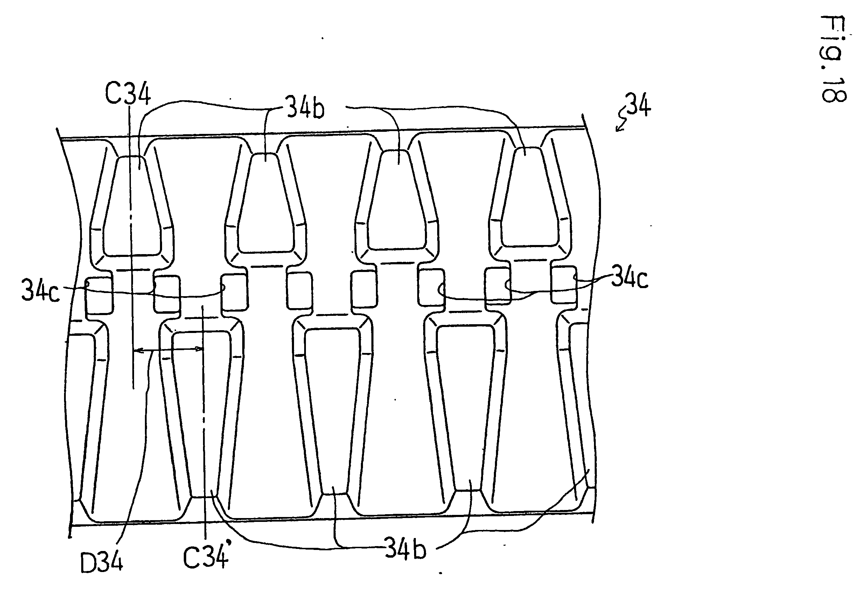

Fig. 18 is a front view of a crawler 34 showing still another embodiment about the same;

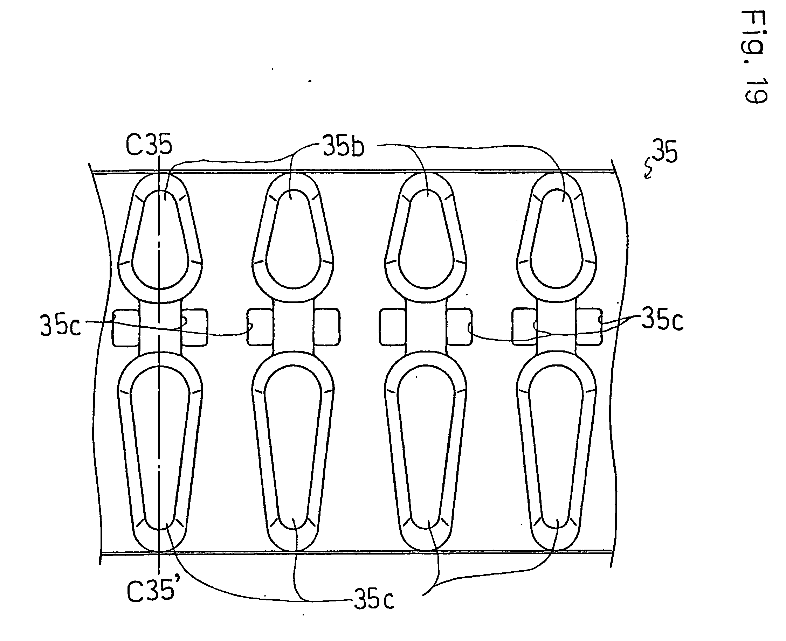

Fig. 19 is a front view of a crawler 35 showing still another embodiment about the same;

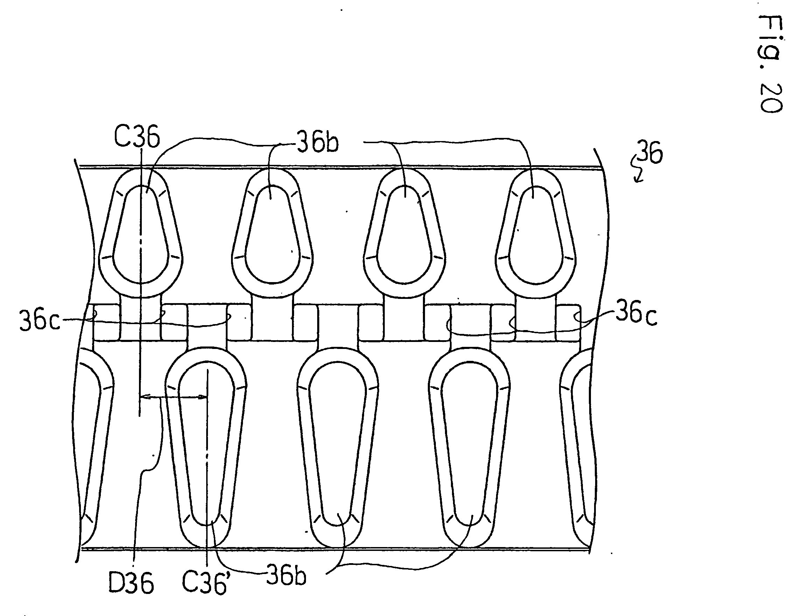

Fig. 20 is a front view of a crawler 36 showing still another embodiment about the same;

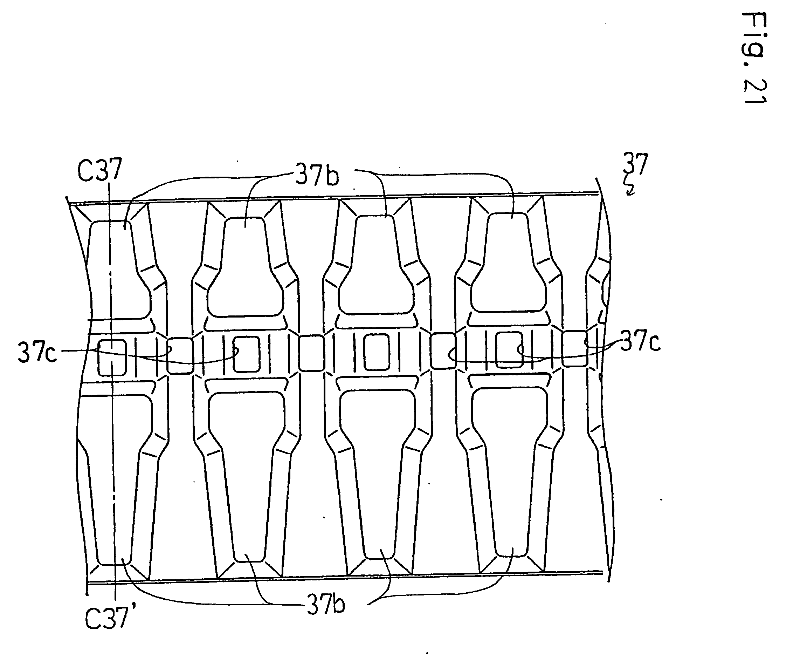

Fig. 21 is a front view of a crawler 37 showing still another embodiment about the same;

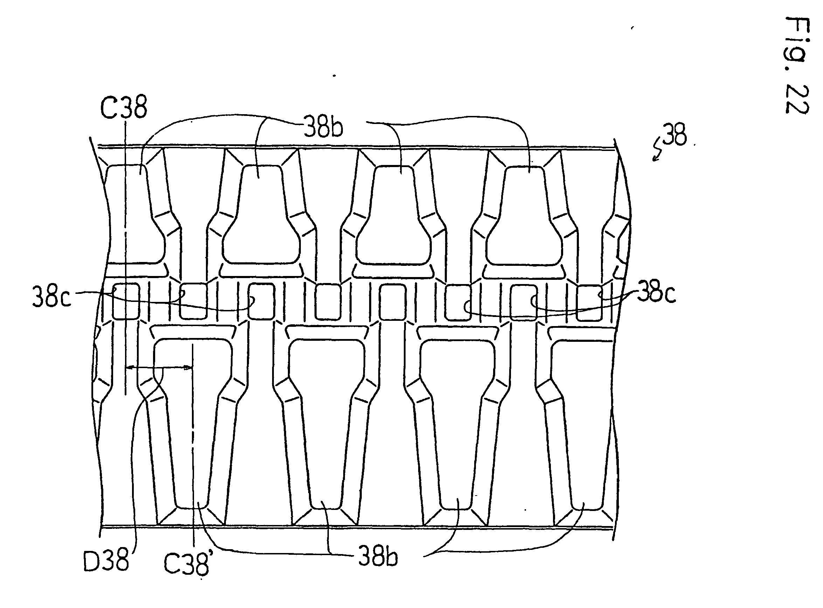

Fig. 22 is a front view of a crawler 38 showing still another embodiment about the same;

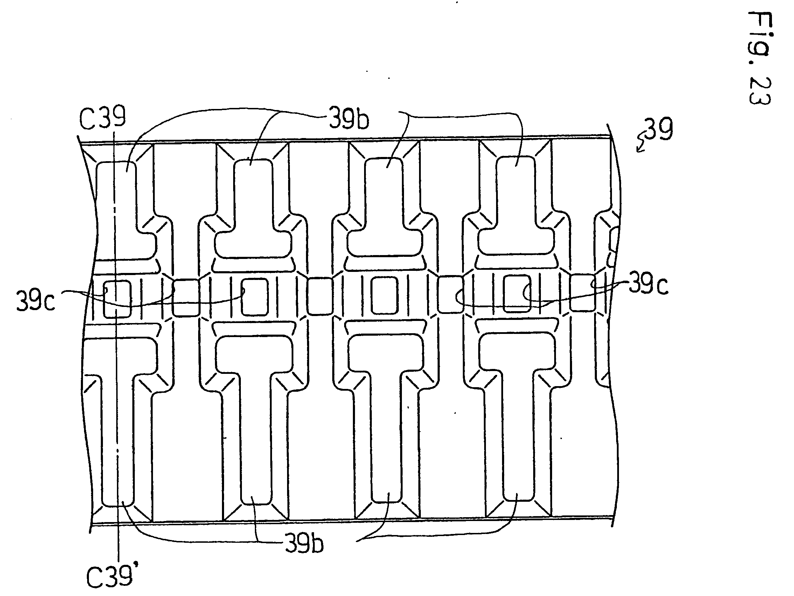

Fig. 23 is a front view of a crawler 39 showing still another embodiment about the same;

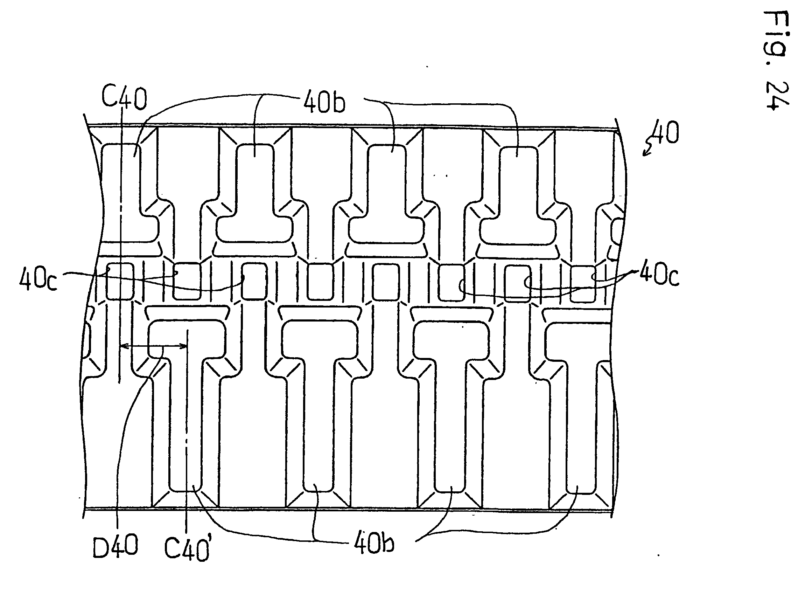

Fig. 24 is a front view of a crawler 40 showing still another embodiment about the same;

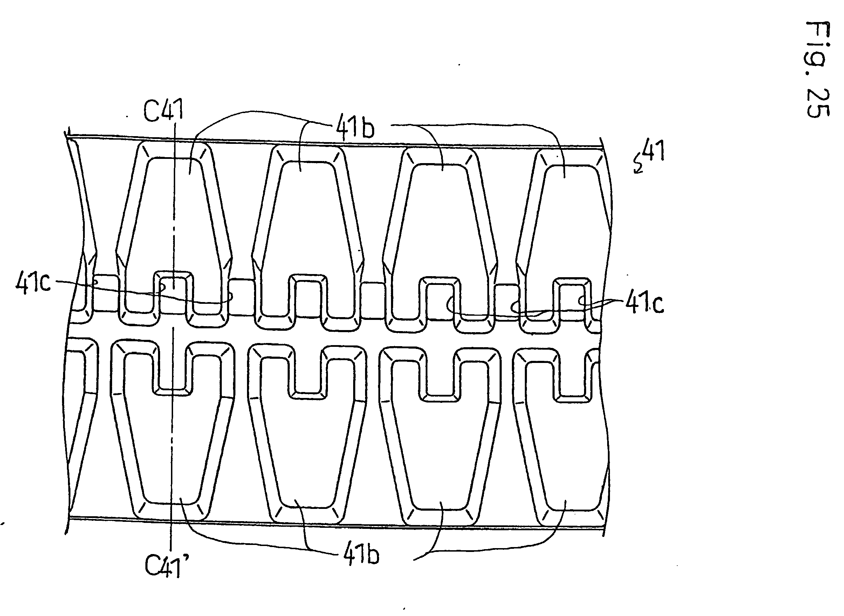

Fig. 25 is a front view of a crawler 41 showing still another embodiment about the same;

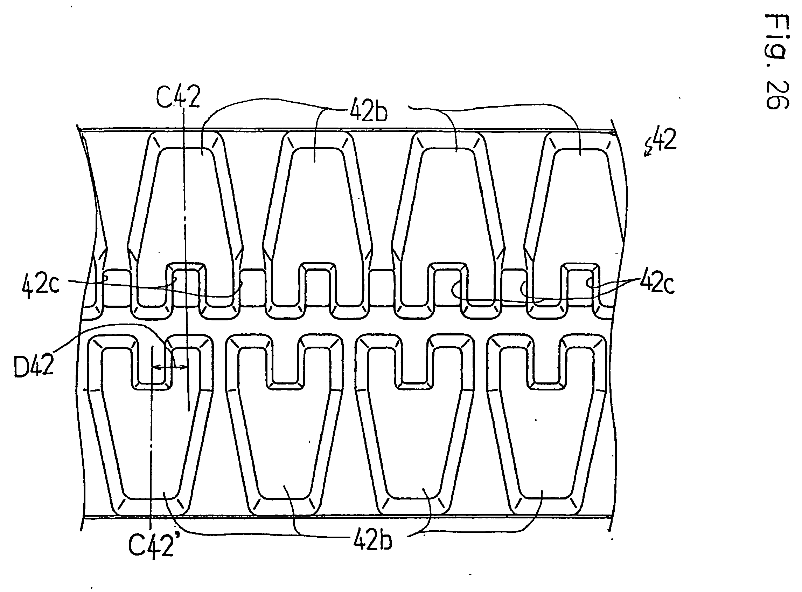

Fig. 26 is a front view of a crawler 42 showing still another embodiment about the same;

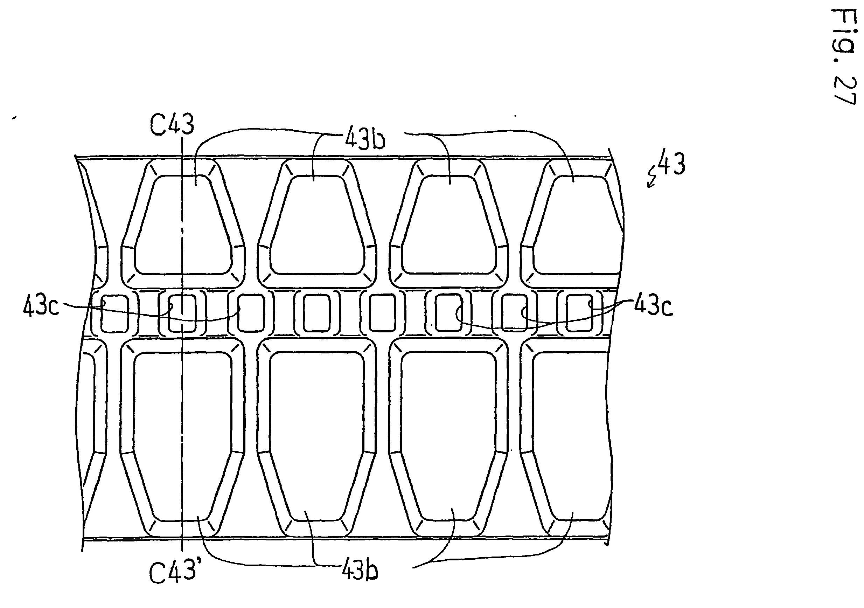

Fig. 27 is a front view of a crawler 43 showing still another embodiment about the same;
Fig. 28 is a front view of a crawler 44 showing still another embodiment about the same;
Fig. 29 is a back view of the same;
Fig. 30 is a right side view of the same;
Fig. 31 is a left side view of the same;
Fig. 32 is a plan view of the same;
Fig. 33 is a bottom view of the same;

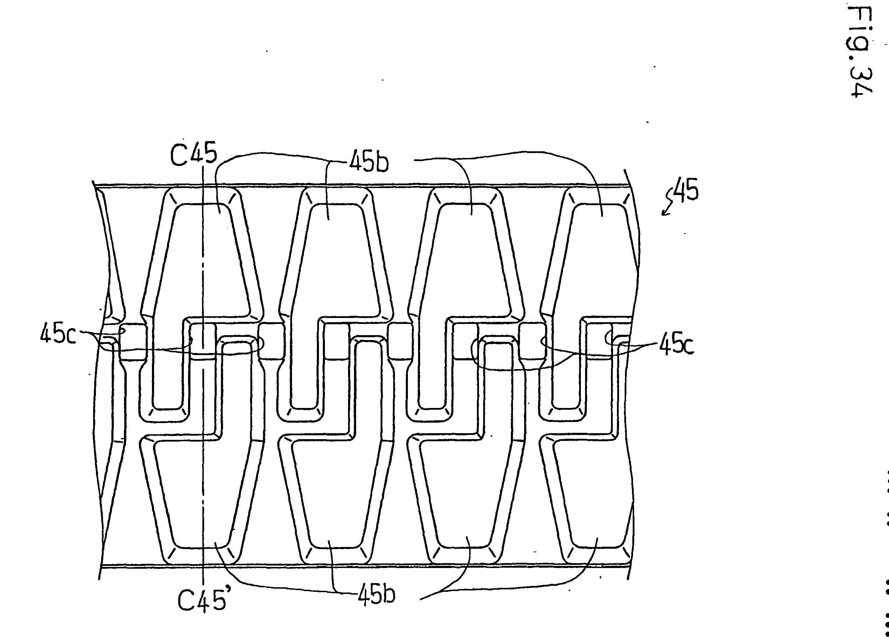

Fig. 34 is a front view of a crawler 45 showing still another embodiment about shapes of lugs;

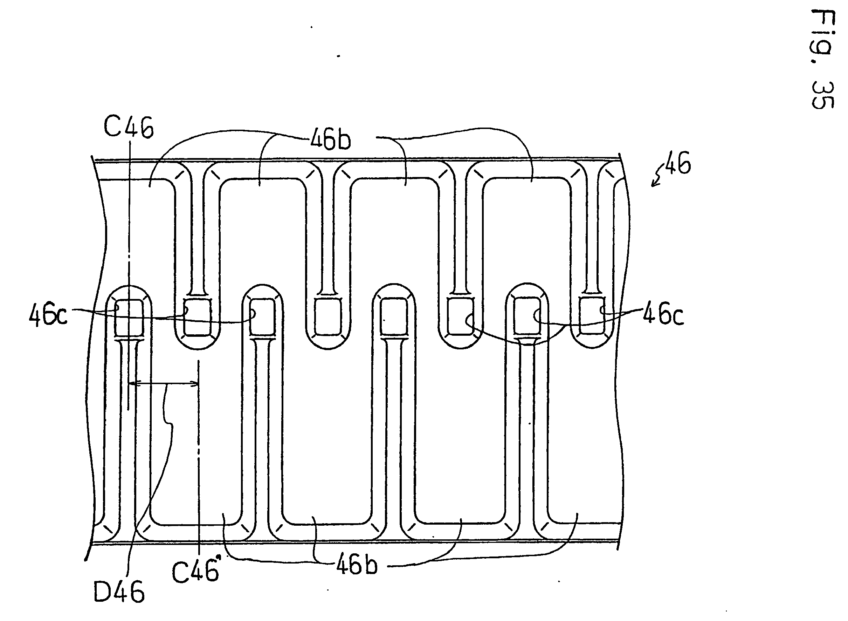

Fig. 35 is a front view of a crawler 46 showing still another embodiment about the same;

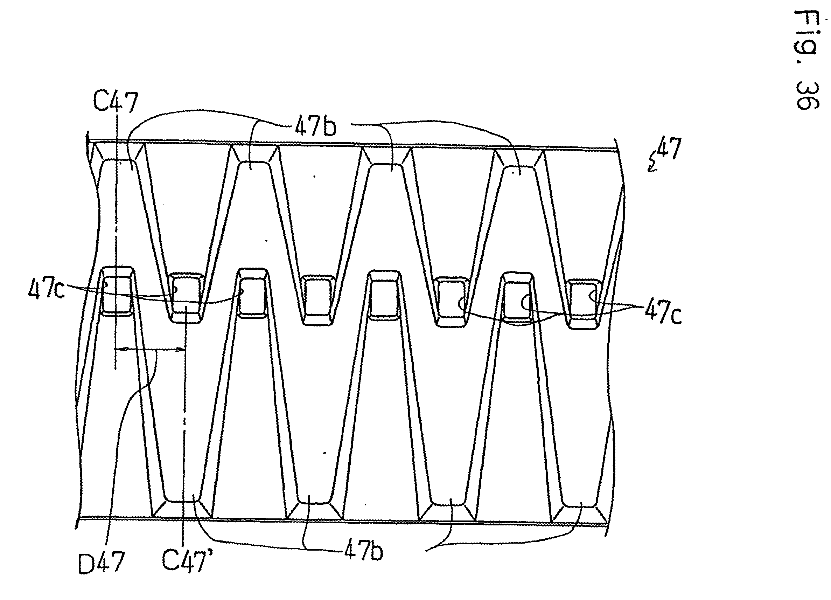

Fig. 36 is a front view of a crawler 47 showing still another embodiment about the same;

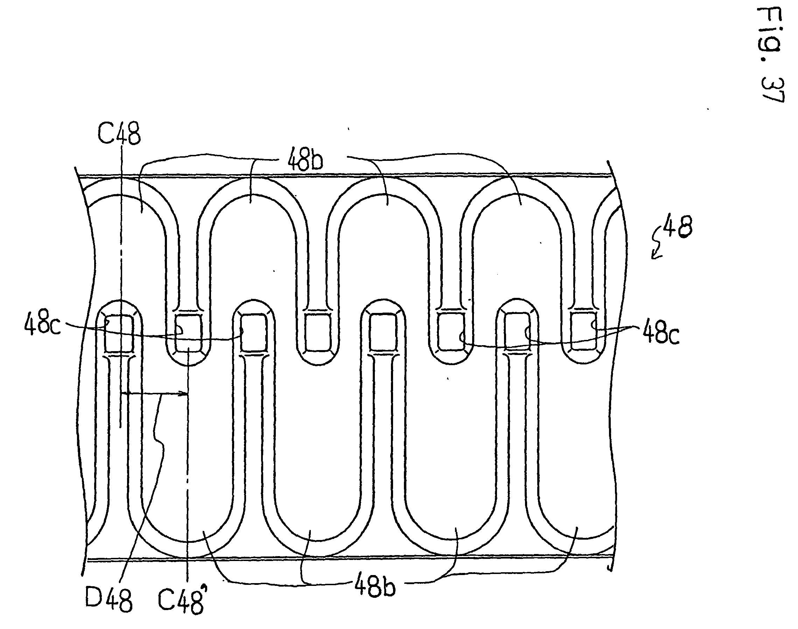

Fig. 37 is a front view of a crawler 48 showing still another embodiment about the same, and

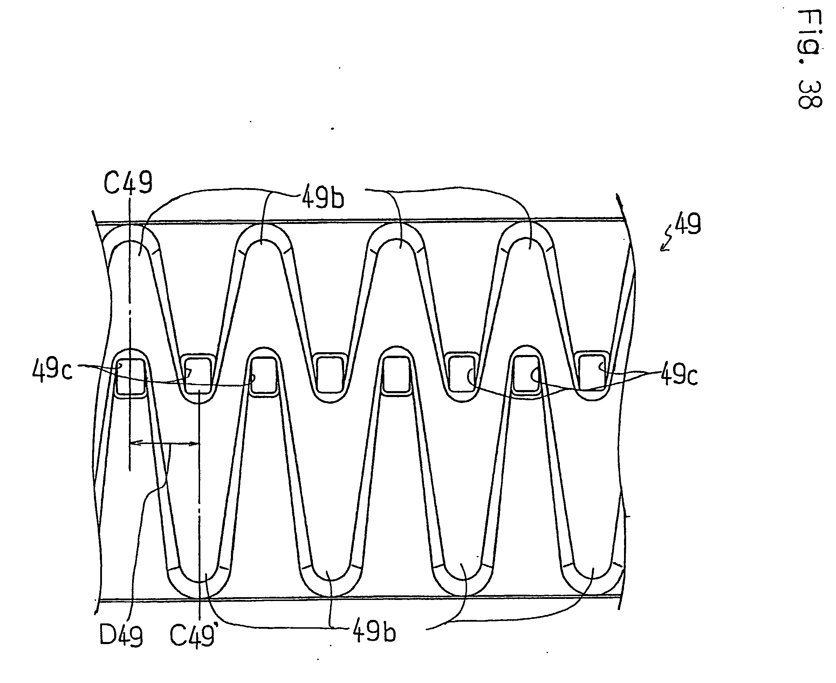

Fig. 38 is a front view of a crawler 49 showing still another embodiment about the same.

### Best Mode for Carrying Out the Invention

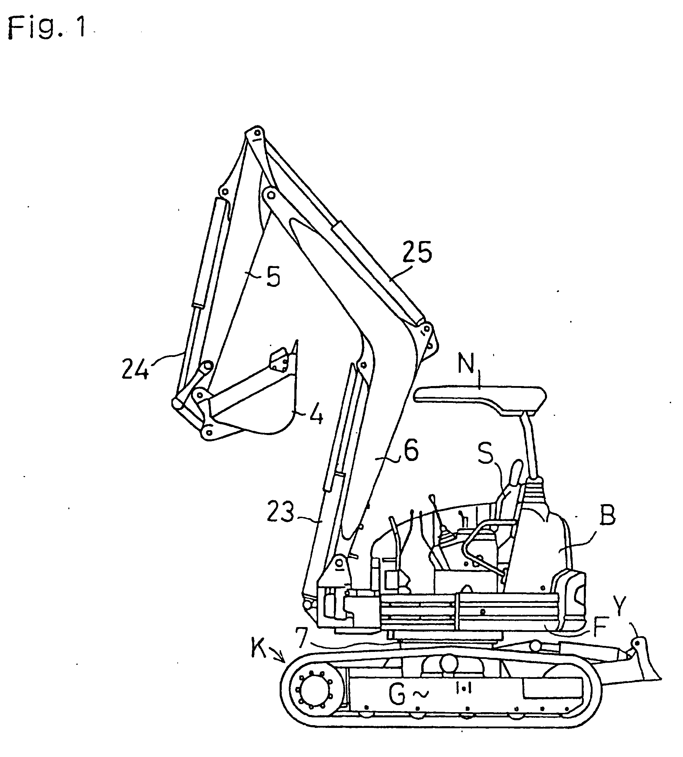

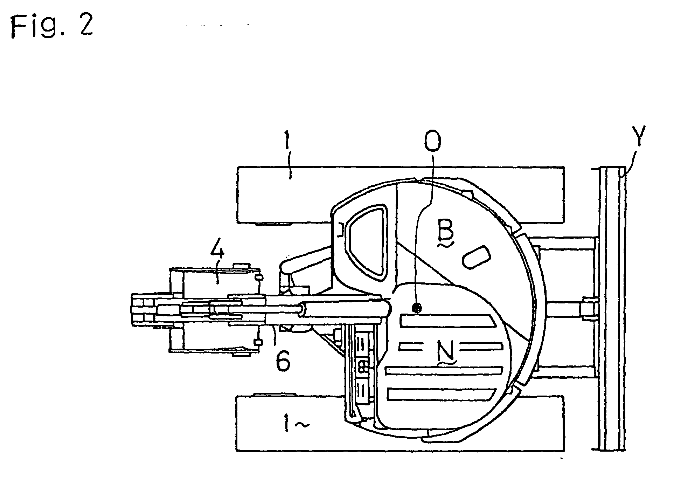

At first, explanation will be given on an entire construction of a swivel working vehicle of the present invention in accordance with Figs. 1 and 2. Left and right crawler travelling devices K are supported by a roller frame G. The swivel body F is laterally rotatably supported through a swivel 7 disposed on the center of the roller frame G.

A blade Y is vertically movably supported on one of front and rear ends of the roller frame G between left and right travelling devices K.

On the swivel body F is disposed an operator's seat S and a bonnet B covering an engine, which are covered thereabove with a canopy N. A basic portion of a main boom 6 is vertically and laterally rotatably supported by the front portion of the swivel body F. A bucket arm 5 is pivoted onto the utmost end portion of the main boom 6 and the bucket 4 is pivoted onto the utmost end portion of the bucket arm 5.

The main boom 6 is rotationally operable by a main boom cylinder 23, the bucket arm 5 is rotationally operable by a bucket arm cylinder 25 and the bucket 4 is rotationally operable by a bucket cylinder 24.

Considering the case of excavation on a narrow alley, the swivel working vehicle according to the embodiment of the present invention is made to be entirely small. The working vehicle is provided at the lower portion thereof with the travelling devices K and at the upper portion thereof with the swivel body F, which is provided the upper portion with the vertically and laterally rotatable back-hoe serving as a working mechanism.

The rear portion of the swivel body F is formed into a substantially circular shape centering on a rotational center 0 of the swivel 7, so that at least a part of the swivel body F in rear of the rotational center 0 is positioned within the width between the both outsides of left and right travelling devices K.

Accordingly, the rear portion of the swivel body F, while the swivel body F being swivelled, does not project beyond the width between the both outsides of left and right travelling devices K, thereby being prevented from collision with an obstacle surrounding the swivel working vehicle.

Such a construction of the small swivel working vehicle is similarly effective in case that it is employed by a standard sized machine or an extremely small swivel vehicle.

Also, if the front portion of the swivel body F is formed into a substantially circular shape so as not to project beyond the width between the both outsides of left and right travelling devices K, the machine body is more safe from collision with an obstacle.

However, if an extremely small swivel working vehicle, which can swivel at an extremely small circle, employs such a construction, the pivotal basic portion of its main boom 6 must be disposed near the rotational center O of its swivel body F. For making its bucket 4 laterally rotatable in this condition, another swing arm must be interposed between its bucket arm 5 and its main boom 6, thereby increasing the weight of its back-hoe serving as the working mechanism thereof so as to be out of balance in weight.

For this reason, the swivel body F of the small swivel working vehicle being able to swivel at a small circle according to the embodiment of the present invention is formed at only its rear portion into the substantially circular shape centering on the rotational center 0, so that the the basic portion of the main boom 6 disposed at the front portion thereof projects partly beyond the width between the both outsides of travelling devices K. However, an operator watches forward so as not to come into collision of the front portion of the swivel body F with an obstacle.

When the swivel working vehicle, which is so constructed that the rear portion of the swivel body F can swivel within the width between both outsides of the travelling devices K as mentioned above, is placed on the bed of the dump truck T in the condition that the swivel body F with the back-hoe including the bucket 4 is directed in perpendicular to the travelling direction of the travelling devices K, the distance b2 between the balanced point P and the center of gravity of the balance weight W2is made to be smaller than the distance a2 between the balanced point P and the center of gravity of the bucket 4 because the part of the swivel body F in rear of the balanced point P is extended at a small degree.

If providing the balance weight W2 enabling the swivel working vehicle to be prevented from being lopsided toward the bucket 4 or toppling while keeping the relation between the distances a2 and b2, the balance weight W2 is required to be considerably heavier than the balance weight W1, so that the entire weight and the cost of the swivel working vehicle are increased.

For this reason, the present invention enables the balance weight W2 to be lighter while keeping such an advantage of the swivel working vehicle that can swivel at a small circle.

In the swivel working vehicle of the present invention, the balanced point P between the center gravities of the bucket 4 and the balance weight W2 is moved outside as much as possible, so that the distance a2 shown in Fig. 3 can be smaller and the distance b2 shown in the same can be larger.

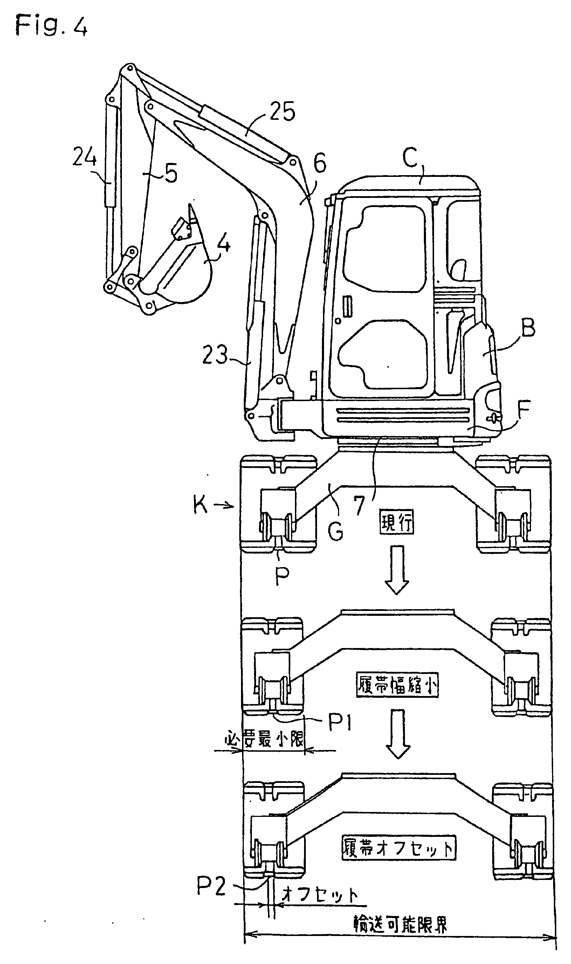

For moving the balanced point P outside, at first, the width of each of the crawlers 1 is smaller as shown in Fig. 4, thereby moving the core metal projections 1a of each crawler 1 defining the balanced point P toward each outside end of the machine body, whereby the balanced point P1 of the vehicle provided with the narrow crawlers 1 can be more outside than the balanced point P1 of the vehicle provided with the standard wide crawlers 1.

Furthermore, the present invention provides crawlers 1, while being narrowed, having respective core metal projections 1a offset toward respective outsides. The offset core metal projections 1a define a balanced point P2, which are more outside than the balanced point P1.

Accordingly, the distance a2 is smaller and the distance b2 is larger, thereby preventing the machine body from being lopsided toward the bucket 4 or toppling while the light balance weight W2 is provided.

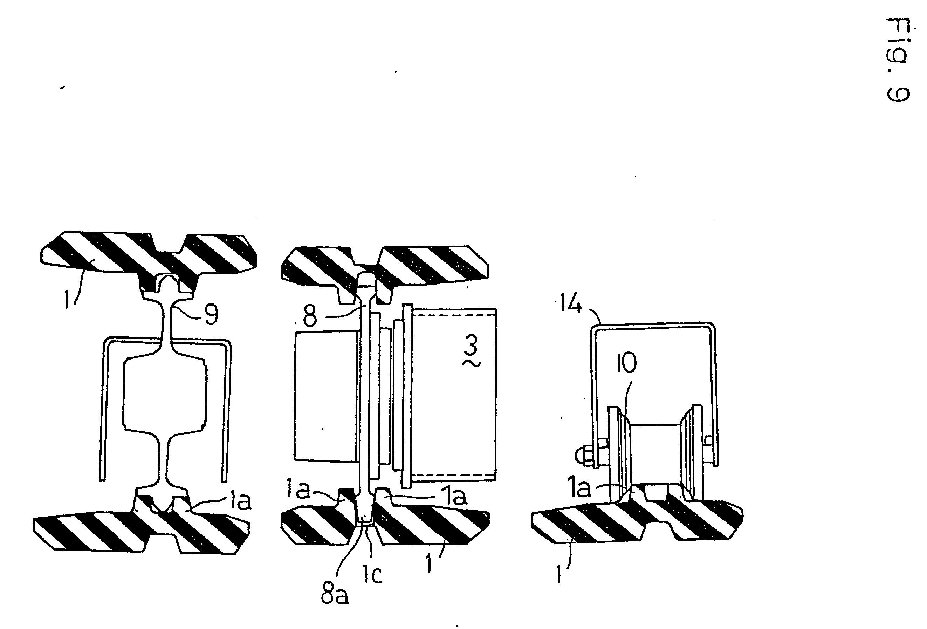

Referring to Fig. 9, there are described the three portions of the crawler 1 having the outside offset core metal projections 1a showing the relations of the crawler 1 with a roller 10 and a roller frame 14, with a sprocket wheel 8 and a motor 3 and with an idler 9.

In this regard, teeth 8a of the rotated sprocket wheel 8 are engaged into engaging holes 1c formed in the crawler 1 between the left and right core metal projections 1a thereof, so as to drive the crawler 1.

The core metal projections 1a offset toward the outside of the crawler 1 from the lateral center thereof as the above become laterally asymmetrical about the crawler 1, whereby naturally a common crawler member cannot used for both left and right crawlers.

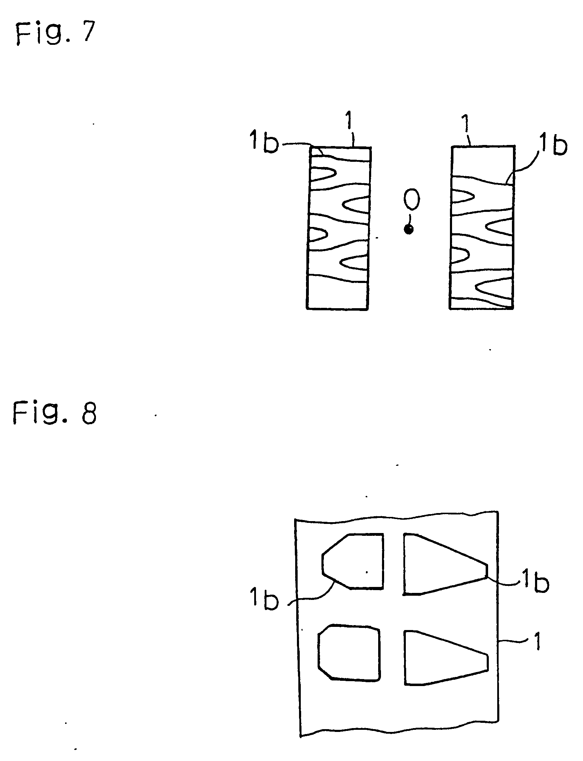

For solving the problem according to the present invention, the lugs 1b formed right and left on an outer peripheral surface of the crawler 1 are formed to assume point symmetrical shapes about the rotational center 0 of the swivel 7 as shown in Fig. 6 or 7.

Accordingly, the same member can be used for both of the left and right crawlers 1, thereby making the cost reduced.

Also, since the left and right crawlers can be replaced with each other in correspondence to the degree of wear of lugs 1b, the useful life of the crawlers 1 can be prolonged and the handling thereof can be improved.

While such constructed, if the left and right lugs, between which the laterally offset core metal projections 1a are disposed, differ in their adhesion, there could be such a problem that the rubber crawler 1 having them could not assume sufficient adhesion. Considering it, the lugs 1b and 1b, which are disposed at left and right sides about the core metal projections 1a, may be so constructed as to occupy the same area as shown in Fig. 8.

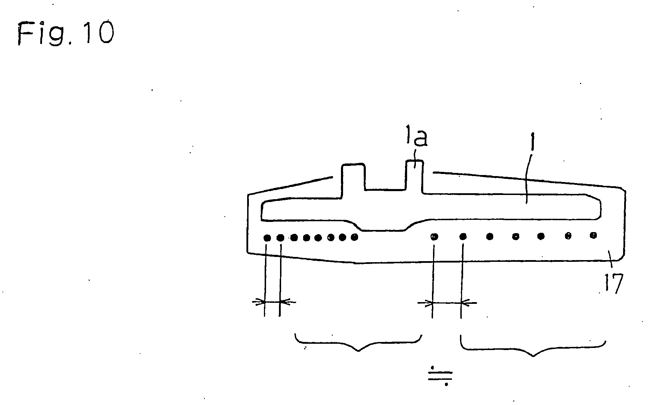

For another problem caused by the core metal projections 1a laterally offset from the lateral center in the rubber crawler 1, the same number of uniformly spaced steel cords 17 cannot be disposed at left and right sides about the core metal projections 1a respectively. Then, as shown in Fig. 10, the same number of the steel cords 17 are disposed left and right about the core metal projections 1a while the spaces between the left steel cords 17 are different from those between the right steel cords 17, thereby keeping the strength of the rubber crawler 1 caused by the steel cords 17.

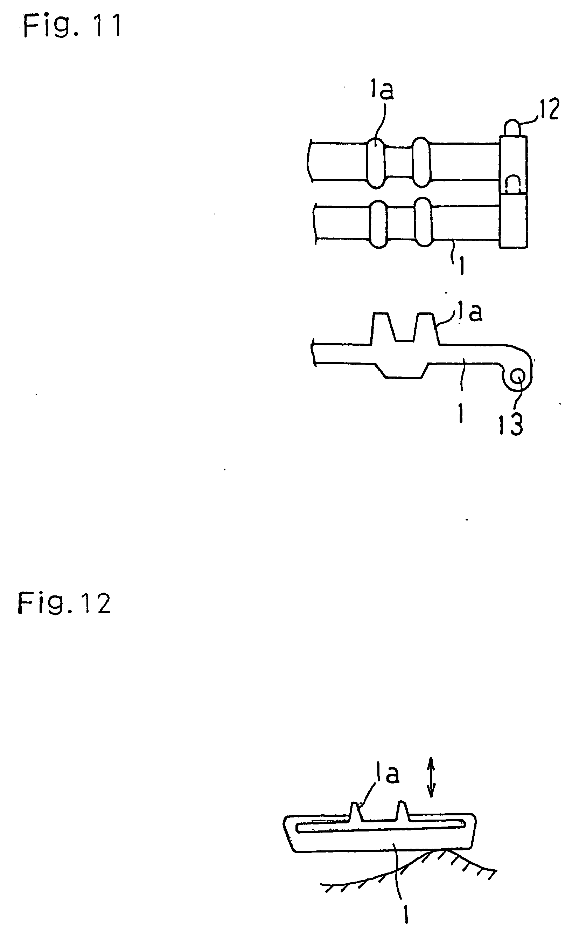

Referring to the rubber crawler 1 shown in Figs. 11 and 12, it comprises each of individual flexible rubber crawler pieces 1 connected with each other by engagement of convexes 12 and concaves 13, which are provided on respective ends of each crawler piece 1 as shown in Fig. 11, so that, even if it is astride a projection of the ground or a stone on the ground, which is laterally eccentrically positioned with regard to the crawler 1 as shown in Fig. 12, each rubber crawler piece 1 does not become deformed, thereby preventing the crawler 1 from bending at its one side.

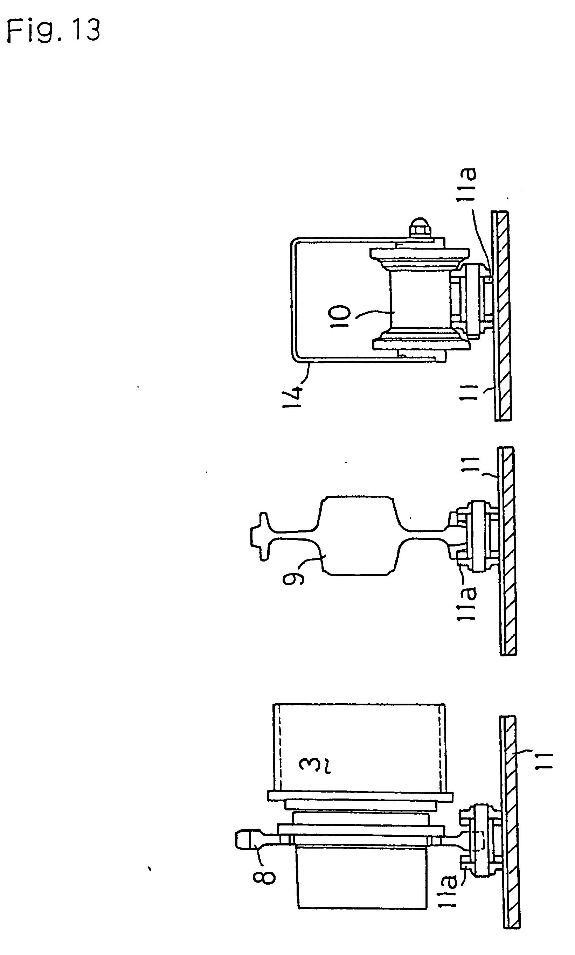

The present invention mainly refers to embodiments about the rubber crawler 1, however, the swivel working vehicle using an iron crawler 11 shown in Fig. 13 can be adapted for the present invention. Referring to Fig. 13, there are the iron crawler 11 having outside eccentric balanced point P by outside offsetting engaging projections 11a thereof, showing the relations of the crawler 11 with the sprocket wheel 8, the idler 9 and the roller 10.

Referring to Fig. 14, there are shown relations of an iron crawler piece 11 with a roller 18. As the top drawing in Fig 14, both side wheels of a conventional roller 18 do not abut against the iron crawler piece 11. According to the embodiment of the present invention as the middle and bottom drawings in Fig. 14, both side wheels of the roller 18 are made to be diametrically large and the upward projections are formed by the upper surface of the iron crawler piece 11, so that the side wheels of the roller 18 can abut against the projections of the iron crawler piece 11, thereby preventing the iron crawler 11 from dislodging and improving the endurance thereof.

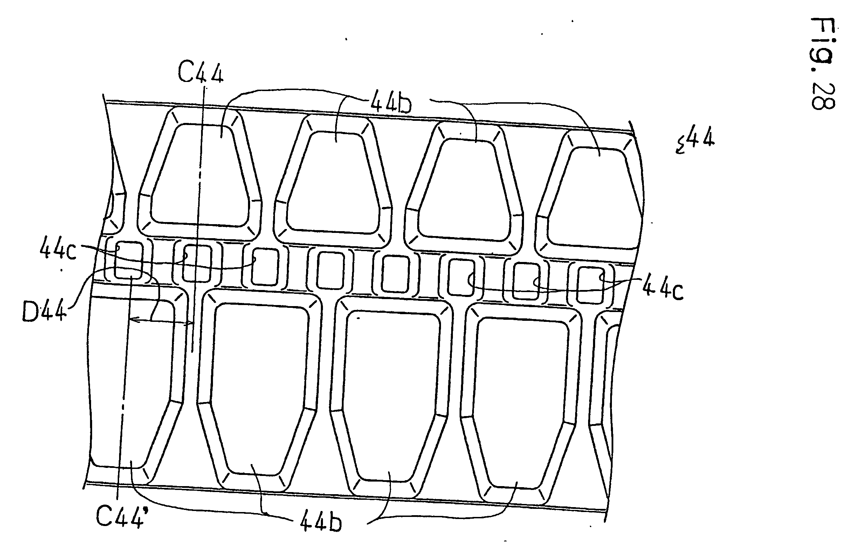

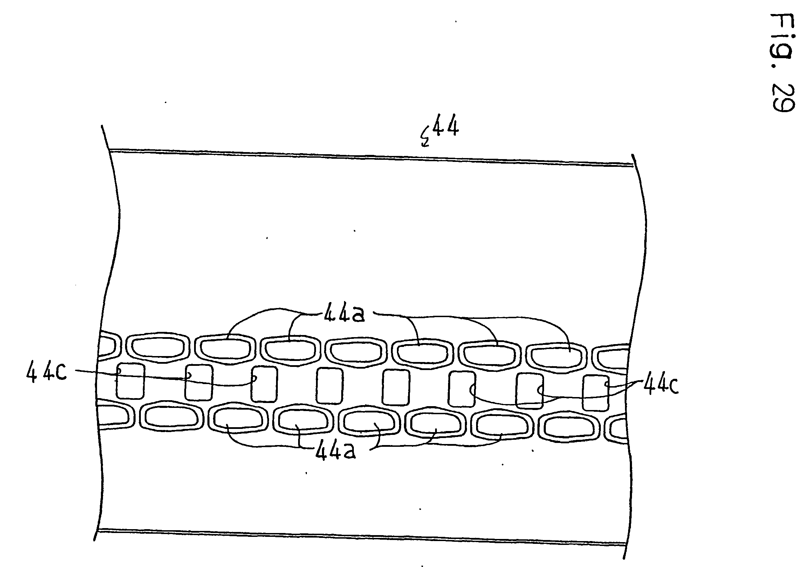

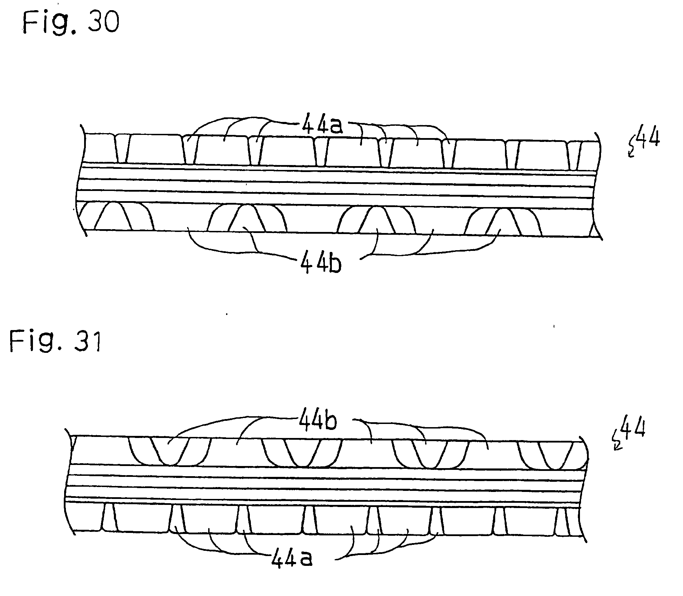

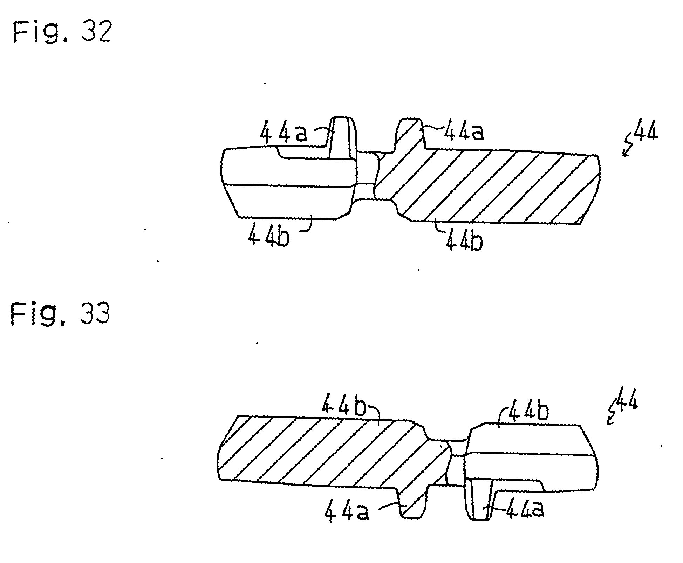

Next, as following the rubber crawler (it is simply called a crawler hereinafter) 1, crawlers from 31 to 49 as detailed embodiments of such a crawler, which is provided with the core metal projections offset toward its outside from its lateral center and is provided on the peripheral surface thereof with left and right lugs assuming point symmetrical shapes about the rotational center 0 of the swivel 7, will be described according to Figs. from 15 to 38. In this regard, only a crawler 44 is described according to a rear view, left and right side views, a partly sectional front view and a partly sectional bottom view as well as a front view (Figs. 28 to 33). The other crawlers are described according to only a front view so as to show respective front shapes thereof.

At first, explanation will be given on each of crawlers 31, 33, 35, 37, 39, 41, 43, 45, whose lugs formed on one lateral side thereof about the core metal projections 1a are disposed at the same longitudinal positions with ones on the other lateral side.

Each crawler 31, 33, 35, 37, 39, 41, 43 or 45 forms a pair of left and right core metal projections offset from the lateral center thereof.

On the inner surface of each crawler 31, 33, 35, 37, 39, 41, 43 or 45, between each pair of left and right core metal projections is formed each engaging hole 31c, 33c, 35c, 37c, 39c, 41c, 43c or 45c so as to engage with each of the teeth 8a of the sprocket wheel 8.

On the outer peripheral surface of each crawler are formed lugs 31b, 33b, 35b, 37b, 39b, 41b, 43b or 45b assuming point symmetrical shapes about the rotational center 0 of the swivel 7.

In these crawlers, each of the crawlers 33, 35, 37, 39, 41, 43 and 45 is provided with the lugs 33b, 35b, 37b, 39b, 41b, 43b or 45b whose lengths in the longitudinal direction of the crawler are reduced as they approach the outer ends apart from the lateral center of the crawler.

Due to such shapes of lugs, soils or the like contaminated between the lugs can easily be swept out toward both outsides of the crawler as the vehicle travels, thereby reducing the amount of contaminations carried together with the rotating crawler.

The other crawler 31 forms the lugs 31b having the same length over the whole of the lateral width thereof also enables good soil sweeping, thereby reducing the contaminations carried together with the rotating crawler.

The area of each left lug 41b or 45b of each of the crawlers 41 and 45 is substantially as large as each right lug 41b or 45b so as to make the adhesive areas and pressures of left and right lugs substantially identical with each other, thereby reducing preventing the causing of inside eccentric abrasion of respective left and right lugs, whereby the vehicle can travel with stability all the time and the endurance of the crawlers 41 and 45 can be prolonged.

As the above, each of crawlers 31, 33, 35, 37, 39, 41, 43 and 45 is provided with lugs 31b, 33b, 35b, 37b, 39b, 41b, 43b or 45b of which ones formed on the left side thereof are disposed at the same longitudinal positions of the crawler with ones on the right side thereof.

In this regard, each of longitudinal center lines C31, C33, C35, C37, C39, C41, C43 and C45 provided for each of one side lugs 31b, 33b, 35b, 37b, 39b, 41b, 43b and 45b is coincident in the longitudinal direction of the crawler with each of longitudinal center lines C31', C33', C35', C37', C39', C41', C43' and C45' provided for each of the other side lugs 31b, 33b, 35b, 37b, 39b, 41b, 43b and 45b.

Due to this construction, while the swivel working vehicle travels, left and right lugs formed on the crawler touch the ground simultaneously, thereby increasing the driving power of the vehicle.

Next, explanation will be given on crawlers 32, 34, 36, 38, 40, 42, 44, 46, 47, 48 and 49 whose lugs formed on one lateral side thereof about the core metal projections 1a are offset in the longitudinal direction of the crawler from the lugs on the other lateral side thereof.

Each crawler 32, 34, 36, 38, 40, 42, 44, 46, 47, 48 or 49 forms a pair of left and right core metal projections 1a, 44a offset from the lateral center thereof.

On the inner surface of each crawler, between each pair of left and right core metal projections is formed each engaging hole 32c, 34c, 36c, 38c, 40c, 42c, 44c, 46c, 47c, 48c or 49c so as to engage with each of the teeth 8a of the sprocket wheel 8.

On the outer peripheral surface of each crawler are formed lugs 32b, 34b, 36b, 38b, 40b, 42b, 44b, 46b, 47b, 48b or 49b assuming point symmetrical shapes about the rotational center 0 of the swivel 7.

In these crawlers, each of crawlers 33, 35, 37, 39, 41, 43 and 45 is provided with lugs 33b, 35b, 37b, 39b, 41b, 43b or 45b whose lengths in the longitudinal direction of the crawler are reduced as they approach the outer ends apart from the lateral center of the crawler.

The strength of one lateral side part of each crawler 32, 34, 36, 38, 40, 42, 44, 46, 47, 48 or 49 about its core metal projections is substantially as large as that of the other lateral side part thereof.

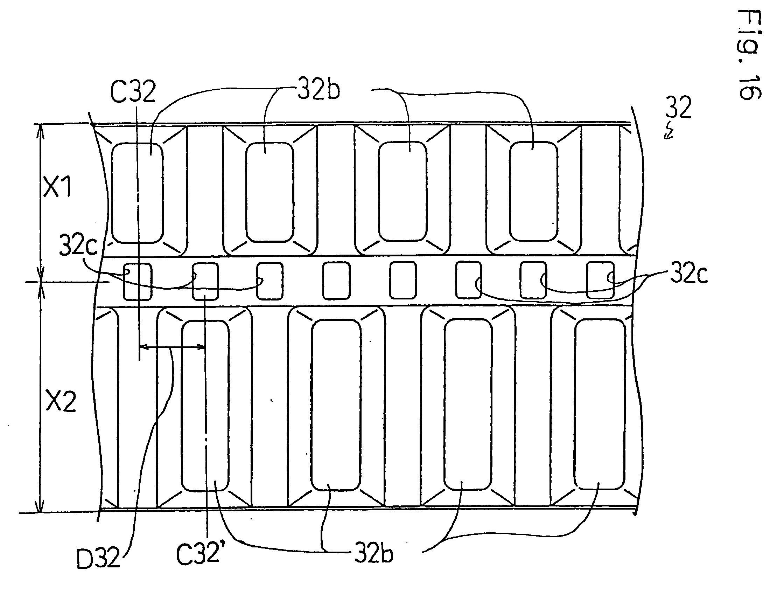

In this regard, the crawler 32 shown in Fig. 16, for example, is formed so as to assume laterally divided parts X1 and X2 which have the same strengths substantially.

Accordingly, the working vehicle can travel with stability.

In these crawlers, each of the crawlers 34, 36, 38, 40, 42, 44, 47 and 49 is provided with lugs 34b, 36b, 38b, 40b, 42b, 44b, 47b or 49b whose lengths in the longitudinal direction of the crawler are reduced as they approach the outer ends apart from the lateral center of the crawler.

Due to such shapes of lugs, soils or the like contaminated between the lugs can easily be swept out toward both outsides of the crawler as the vehicle travels, thereby reducing the amount of contaminations carried together with the rotating crawler.

Each of the other crawlers 32, 46 and 48 forms the lugs 32b, 46b or 48b having the same length over the whole of the lateral width thereof also enables good soil sweeping, thereby reducing the contaminations carried together with the rotating crawler.

The area of each left lug 42b of the crawler 42 is substantially as large as each right lug 42b so as to make the adhesive areas and pressures of left and right lugs substantially identical with each other, thereby reducing preventing the causing of inside eccentric abrasion of respective left and right lugs, whereby the vehicle can travel with stability all the time and the endurance of the crawler 42 can be prolonged.

As the above, each of crawlers 32, 34, 36, 38, 40, 42, 44, 46, 47, 48 and 49 is provided with lugs 32b, 34b, 36b, 38b, 40b, 42b, 44b, 46b, 47b, 48b and 49b of which ones formed on the left side thereof are offset in the longitudinal direction of the crawler from ones on the right side thereof.

In this regard, each of longitudinal center lines C32, C34, C36, C38, C40, C42, C44, C46, C47, C48 and C49 provided for each of one side lugs 32b, 34b, 36b, 38b, 40b, 42b, 44b, 46b, 47b, 48b and 49b is offset in the longitudinal direction of the crawler from each of longitudinal center lines C32', C34', C36', C38', C40', C42', C44', C46', C47', C48' and C49' provided for each of the other side lugs 32b, 34b, 36b, 38b, 40b, 42b, 44b, 46b, 47b, 48b and 49b with each of lengths D32, D34, D36, D38, D40, D42, D44, D46, D47, D48 and D49.

Due to this construction, while the swivel working vehicle travels, either of left and right lugs formed on the crawler touches the ground all the time, thereby stabilizing the travelling of the vehicle.

Such constructions according to the present invention have effects as follows:

Since the core metal projections of the crawler are offset toward the outside of the machine body from the lateral center position of the crawler, the distance between the core metal projections thereof serving as the balanced point of the vehicle and the center of gravity of the balance weight can be increased while the distance between the balanced point and the center of gravity of the bucket thereby preventing the machine body from being lopsided toward the bucket or toppling even if the balance weight is lightened.

Since the steel cords for reinforcing the crawler are provided at the left side thereof about the core metal projections substantially as many as those at the right side thereof, the both left and right parts of the crawler about the core metal projections thereof can be strengthened as much as each other, thereby preventing the crawler from eccentric abrasion or eccentric loading.

In such a construction that the core metal projections of the crawler constituting the travelling device are offset toward outside from the lateral center of the crawler, since the lugs occupy substantially the same area on the left and right sides of the core metal projections, thereby equalizing the adhesive areas and the supportable load of the both side lugs, whereby the crawler can also be prevented from eccentric abrasion or eccentric loading.

Also, since the lugs are formed so as to assume laterally symmetrical shapes about the core metal projections, the same crawler can be used for both the left and right crawlers while the core metal projections are eccentrically disposed on the crawler, thereby reducing the cost. Otherwise, since the lugs of each of the crawlers disposed left and right on the machine body are formed so as to assume point symmetrical shapes about the rotational center of the swivel body, the same crawler can be used for both the left and right crawlers, thereby reducing the cost. Since the left and right crawlers can be replaced with each other in correspondence to the degree of abrasion of the lugs, the endurance of the crawler can be prolonged and the operability thereof can be improved.

Furthermore, since the left and right lugs formed on the outer peripheral surface of the crawler assume the same shapes substantially, the adhesive pressures of the left and right lugs are equalized. Accordingly, the crawler can be prevented from eccentric abrasion of its lugs, that is, the abrasion of only inner side of each of the left and right lugs, thereby enabling the vehicle to travel with a stability all the time and prolonging the endurance of the crawlers.

Still furthermore, since each lug is formed so as to assume smaller or constant length as approaching the outside thereof, soils or the like contaminated between the lugs can be swept out through the both outsides of each crawler as the vehicle travels, thereby reducing the amount of contaminations carried together with the rotating crawler.

And since crawler pieces having the core metal projections are connected front and behind with one another through connecting means provided on both side ends thereof, the crawler comprising such crawler pieces becomes a flexible integral plate corresponding to the state of being astride a stone or other obstacles on the ground laterally eccentrically positioned about the crawler while travelling, thereby improving the endurance of the crawler.

### Possibility of Industrial Use

As the above, the present invention can be employed by a swivel working, for example, a hydraulic back-hoe shovel enabling small circular swivelling, whose rear end part does not project outward from its travelling device while the working mechanism, for example, a back-hoe including a bucket is swivelled at about 90 ° angle, so as to provide the swivel working vehicle which has advantages in the stability of working in addition to the conventional capacities of swivelling and operation because the balance weight thereof can be reduced, and provide the swivel working vehicle with low costing crawlers having good endurance.

## Claims

1. A swivel working vehicle comprising:
a pair of travelling devices (K) disposed at a lower portion thereof and defining a travelling direction;
a swivel body (F) disposed at an upper portion thereof; and
a working mechanism mounted on said swivel body (F);
said travelling devices (K) respectively comprising a crawler (1;31-49) having a width perpendicular to the travelling direction and core metal projecting portions (1a;44a) sandwiched by outer flanges of rollers (10;18);
**characterized in that**
said core metal projecting portions (1a;44a) of said crawlers (1;31-49) are laterally offset from the center of the width towards the lateral outsides of the crawlers (1;31-49); and
said rollers (10;18) abut against said crawlers (1;31-49).

2. The swivel working vehicle according to claim 1, comprising:
steel cords (17) for reinforcing said crawlers (1), wherein substantially the same number of said steel cords (17) is disposed left and right about said core metal projecting portions (1a) as seen in the travelling direction.

3. The swivel working vehicle according to claim 1, comprising:
lugs (41b;42b;45b) provided on said crawlers (41;42;45), said lugs (41b;42b;45b) occupying substantially the same area on the left and right sides of said core metal projecting portions (1a) as seen in the travelling direction.

4. The swivel working vehicle according to claim 1, comprising:
lugs (32b-49b) provided on said crawlers (32-49), said lugs (32b-49b) being formed so as to assume laterally symmetrical shapes about said core metal projecting portions (1a;44a), thereby enabling the same crawler to be used for both left and right crawlers (32-49) as seen in the travelling direction.

5. The swivel working vehicle according to claim 1, comprising:
lugs (32b-49b) provided on said crawlers (32-49), said lugs (32b-49b) being formed left and right on the outer peripheral surface of said crawlers (32-49) as seen in the travelling direction so as to have substantially the same shape.

6. The swivel working vehicle according to claim 1, comprising:
lugs (1b;32b-49b) provided on said crawlers (1;32-49), said lugs (1b;32b-49b) being formed so as to assume point symmetrical shapes about a center of rotation (O) of said swivel body (K).

7. The swivel working vehicle according to claim 1, comprising:
lugs (33b-45b;47b;49b) provided on said crawlers (33-45;47;49), said lugs (33b-45b;47b;49b) being formed left and right on the outer peripheral surface of said crawlers (33-45;47;49) as seen in the travelling direction so that their lengths in the travelling direction are smaller or constant as approaching the lateral outsides of said crawlers (33-45;47;49).

## Patentansprüche

1. Dreh-/Schwenk-Arbeitsfahrzeug, mit:
einem Paar Fahrvorrichtungen (K), die an einem unteren Abschnitt hiervon angeordnet sind und eine Fahrrichtung festlegen,
einem Dreh-/Schwenkkörper (F), der an einem oberen Abschnitt hiervon angeordnet ist, und
einem Arbeitsmechanismus, der an dem Dreh-/Schwenkkörper (F) angebracht ist, wobei die Fahrvorrichtungen (K) jeweils eine Raupenkette (1;31-49) aufweisen, die eine Breite senkrecht zu der Fahrrichtung sowie Metallkern-Vorsprungsabschnitte (1a;44a) aufweist, die von Außenflanschen von Walzen (10;18) sandwichartig gehalten sind,
**dadurch gekennzeichnet, dass**
die Metallkern-Vorsprungsabschnitte (1a;44a) der Raupenketten (1;31-49) lateral von der Mitte der Breite zu den seitlichen Außenseiten der Raupenketten (1;31-49) hin versetzt sind, und
die Walzen (10;18) an den Raupenketten (1;31-49) anliegen.

2. Dreh-/Schwenk-Arbeitsfahrzeug nach Anspruch 1, mit:
Stahlsträngen (17) zum Verstärken der Raupenketten (1), wobei im wesentlichen die gleiche Anzahl der Stahlstränge (17) links und rechts von den Metallkern-Vorsprungsabschnitten (1a), in der Fahrrichtung betrachtet, angeordnet sind.

3. Dreh-/Schwenk-Arbeitsfahrzeug nach Anspruch 1, mit:
Ansätzen bzw. Pratzen (41b;42b;45b), die an den Raupenketten (41;42;45) vorgesehen sind, wobei die Ansätze (41b;42b;45b) im wesentlichen die gleiche Fläche auf den linken und rechten Seiten der Metallkern-Vorsprungsabschnitte (1a), in der Fahrrichtung betrachtet, einnehmen.

4. Dreh-/Schwenk-Arbeitsfahrzeug nach Anspruch 1, mit:
Ansätzen (32b-49b), die an den Raupenketten (32-49) vorgesehen sind, wobei die Ansätze (32b-49b) so ausgebildet sind, dass sie lateral symmetrische Formen um die Metallkern-Vorsprungsabschnitte (1a;44a) annehmen, wodurch ermöglicht wird, dass die gleiche Raupenkette sowohl als linksseitige als auch als rechtsseitige Raupenketten (32-49), in der Fahrrichtung betrachtet, verwendet werden kann.

5. Dreh-/Schwenk-Arbeitsfahrzeug nach Anspruch 1, mit:
Ansätzen (32b-49b), die an den Raupenketten (32-49) vorgesehen sind, wobei die Ansätze (32b-49b) links und rechts an der Außenumfangsfläche der Raupenketten (32-49), in der Fahrrichtung betrachtet, ausgebildet sind, und im wesentlichen die gleiche Form haben.

6. Dreh-/Schwenk-Arbeitsfahrzeug nach Anspruch 1, mit:
Ansätzen (1b;32b-49b), die an den Raupenketten (1;32-49) vorgesehen sind, wobei die Ansätze (1b;32b-49b) so ausgebildet sind, dass sie punktsymmetrische Formen um ein Drehzentrum (O) des Dreh-/Schwenkkörpers (K) annehmen.

7. Dreh-/Schwenk-Arbeitsfahrzeug nach Anspruch 1, mit:
Ansätzen (33b-45b;47b;49b), die an den Raupenketten (33-45;47;49) vorgesehen sind, wobei die Ansätze (33b-45;47b;49b) links und rechts an der Außenumfangsfläche der Raupenketten (33-45;47;49), in der Fahrrichtung betrachtet, ausgebildet sind, so dass ihre Längen in der Fahrrichtung zu den lateralen Außenseiten der Raupenketten (33-45;47;49) hin kleiner werden oder konstant sind.

## Revendications

1. Engin de terrassement pivotant comprenant :
une paire de dispositifs mobiles (K) disposée au niveau d'une partie inférieure de celui-ci et définissant une direction de déplacement ;
un corps pivotant (F) disposé au niveau d'une partie supérieure de celui-ci ; et
un mécanisme de terrassement monté sur ledit corps pivotant (F) ;
lesdits dispositifs mobiles (K) comprenant respectivement une chenille (1 ; 31-49) ayant une largeur perpendiculaire à la direction de déplacement et des parties en saillie métalliques d'âme (1a ; 44a) intercalées entre des brides externes de rouleaux (10 ; 18) ;
**caractérisé en ce que**
lesdites parties en saillie métalliques d'âme (1a ; 44a) desdites chenilles (1 ; 31-49) sont décalées latéralement du centre de la largeur vers les côtés extérieurs latéraux des chenilles (1 ; 31-49) ; et
lesdits rouleaux (10 ; 18) viennent en butée contre lesdites chenilles (1 ; 31-49).

2. Engin de terrassement pivotant selon la revendication 1, comprenant :
des câbles métalliques (17) pour renforcer ladite chenille (1), dans lequel des câbles métalliques (17) d'un nombre sensiblement identique sont disposés à gauche et à droite desdites parties en saillie métalliques d'âme (la), observés dans la direction de déplacement.

3. Engin de terrassement pivotant selon la revendication 1, comprenant :
des barrettes (41b ; 42b ; 45b) prévues sur lesdites chenilles (41 ; 42 ; 45), lesdites barrettes (41b ; 42b ; 45b) occupant sensiblement la même surface sur les côtés droit et gauche desdites parties en saillie métalliques d'âme (la), observées dans la direction de déplacement.

4. Engin de terrassement pivotant selon la revendication 1, comprenant :
des barrettes (32b-49b) prévues sur lesdites chenilles (32-49), lesdites barrettes (32b-49b) étant formées de manière à prendre des formes latéralement symétriques autour desdites parties en saillie métalliques d'âme (1a ; 44a), permettant ainsi à cette même chenille d'être utilisée à la fois pour les chenilles gauche et droite (32-49), observées dans la direction de déplacement.

5. Engin de terrassement pivotant selon la revendication 1, comprenant :
des barrettes (32b-49b) prévues sur lesdites chenilles (32-49), lesdites barrettes (32b-49b) étant formées à droite et à gauche sur la surface périphérique externe desdites chenilles (32-49), observées dans la direction de déplacement, afin d'avoir sensiblement la même forme.

6. Engin de terrassement pivotant selon la revendication 1, comprenant :
des barrettes (1b ; 32b-49b) prévues sur lesdites chenilles (1 ; 32-49), lesdites barrettes (1b ; 32b-49b) étant formées de manière à prendre des formes de symétrie ponctuelle autour d'un centre de rotation (O) dudit corps pivotant (K).

7. Engin de terrassement pivotant selon la revendication 1, comprenant :
des barrettes (33b-45b ; 47b ; 49b) prévues sur lesdites chenilles (33-45 ; 47 ; 49), lesdites barrettes (33b-45b ; 47b ; 49b) étant formées à droite et à gauche sur la surface périphérique externe desdites chenilles (33-45 ; 47 ; 49), observées dans la direction de déplacement, de sorte que leur longueur dans la direction de déplacement soit inférieure ou constante en approchant les côtés extérieurs latéraux desdites chenilles (33-45 ; 47 ; 49).
